# EUROPEAN PATENT SPECIFICATION

(11) **EP 2 791 568 B1**
(45) Date of publication and mention of the grant of the patent: **04.04.2018**
(21) Application number: 12857786.3
(22) Date of filing: 14.12.2012
(51) Int. Cl.: B29C 65/34, F16L 47/03, F16L 47/02, G01K 1/14, B29C 65/00, B29C 65/78, B29L 23/00

(54) **METHOD AND ARRANGEMENT FOR MONITORING THE COOLING OF A WELDED JOINT**
VERFAHREN UND ANORDNUNG ZUR ÜBERWACHUNG DER KÜHLUNG EINER SCHWEISSVERBINDUNG
PROCÉDÉ ET DISPOSITIF POUR SURVEILLER LE REFROIDISSEMENT D'UN JOINT SOUDÉ

(30) Priority: 15.12.2011 SE 1151206
(43) Date of publication of application: 22.10.2014
(73) Proprietor: TSC Innovation AB, 901 30 Umeå (SE)
(72) Inventor: LIDSTRÖM, Kjell, S-930 15 Bureå (SE); GUNNARSSON, Lars, S-169 31 SOLNA (SE)
(74) Representative: Zacco Sweden AB
(86) International application number: PCT/SE2012/051401
(87) International publication number: WO 2013/089634

(56) References cited:
- EP-A2- 0 924 053
- WO-A1-82/02593
- WO-A1-97/37167
- WO-A1-2004/008016
- WO-A1-2011/046503
- WO-A1-2011/046503
- DE-C1- 19 738 100
- GB-A- 2 478 964
- JP-A- H09 303 664
- JP-A- 2000 035 184
- US-A- 3 930 159
- US-A- 5 770 832
- US-A1- 2008 203 139

## Description

### Technical area

The present invention concerns a method and an arrangement for monitoring the cooling process during the welding of pipes of a weldable polymer material.

### Background

Pipes of weldable polymer material can be joined through the use of a muff, a cylindrical pipe connector of weldable material, that comprises a heating element. The ends of the pipes are introduced into the muff and the heating element is supplied with current that heats the ends of the pipes and the muff in an area of a weld to such a high temperature that the ends of the pipes and the muff are welded together. Welding equipment with a tension arrangement is in contact with the outer surface of the muff in order to hold together the pipes and the muff during the welding.

Once the welding process has ended, the welded joint must cool before the welding equipment and the tension arrangement can be removed, in order to avoid damage to the newly welded joint. In document WO 97/37167 such a method and tool for joining, repairs and maintenance of insulating line pipes is described.

Document JP 2000 035184 discloses another arrangement for welding of pipes of a weldable polymer material wherein a board of a weldable polymer material is welded to a pipe surface.

The cooling period is a time-consuming part of the welding. In the context of production, it is important to achieve a high efficiency, and it is desirable to carry out the welding with a high weld quality and in a time-efficient manner.

In order to avoid damage to the joint, it may be so that the operator waits a pre-determined period of time before the welding equipment is removed. Thus, this takes place without any direct monitoring of the condition of the welded joint at all. If the welding equipment is removed before the welded joint has cooled sufficiently, there is a risk that the welded joint is damaged during the removal. On the other hand, if the operator waits significantly longer than the time that is necessary, the welding becomes inefficient.

It is possible to measure the temperature by placing a thermoelement in the area of the weld, and determine on the basis of this how the temperature in the joint develops and when the temperature of the weld has fallen sufficiently for it to be possible to remove the welding equipment.

It has, however, proved to be the case that the thermoelement is difficult to place in a satisfactory manner in the area of the weld and, furthermore, that it indicates the temperature at only a single point. It is, further, an expensive solution since each joint always must carry the cost of an integral sensor.

It is, therefore, desirable, to be able to monitor and check in a satisfactory and efficient manner the cooling process such that the temperature of the welded joint has fallen to an acceptable level before the welding equipment is removed.

### Description of the invention

One purpose of the present invention is to offer a method and an arrangement for the efficient and reliable temperature monitoring of the cooling process in the welded joint once the welding process has ended.

This purpose is achieved through the method according to the invention demonstrating the distinctive features and characteristics that are specified in claim 1. The invention concerns also an arrangement with the distinctive features and characteristics according to claim 10. The method is based on the appearance of an identifiable thermal plateau in the temperature curve of the polymer pipe material when its temperature passes the crystalline temperature level, the softening temperature. It is known that the resistance of a metal increases with increasing temperature, and vice versa. The temperature coefficient of resistance represents this correlation, and is a well-known specific material property.

The cooling process starts directly after the welding process has ended. The temperature of the welded joint falls during the cooling period to a level that is lower than the softening temperature; the joint then passes from a liquid state to a solid state. It is not necessary that the temperature of the welded joint reaches the ambient temperature in order for it to be possible to remove the welding equipment in a safe manner.

An electrically conducting tape of metal is used during the welding in the method and arrangement according to the invention, and it is a necessary pre-condition that the fall in temperature of the welded joint is the same as the fall in temperature in the tape. The correlation between the temperature and the resistance of the electrically conducting tape that has been placed in the welded joint ensures that the ratio U/I (voltage divided by current), which corresponds to the resistance R in the tape, falls as the temperature of the tape gradually falls. Thus, also the voltage and current in the tape depend on the temperature.

By supplying a current pulse to the tape after the welding process has been ended and investigating the character of the resulting temperature-dependent signal from the tape, a reliable and safe indication of how the cooling process is developing is obtained. The thermal plateau that appears in the temperature curve of the polymer material of the tube can be identified by monitoring the development of the temperature-dependent signal.

The arrangement according to the invention demonstrates corresponding advantages and technical properties as the above-described method. Embodiments given as examples are revealed in the non-independent claims.

Further distinctive features and advantages of the invention will be made clear in the following detailed description of the invention, which constitutes an example, and is therefore not to be interpreted in such a manner that it is limiting for the protective scope of the invention. References to the attached drawings have been included in the text in order to facilitate understanding, where equivalent or similar parts have been given the same reference number.

### Brief description of drawings

**Figure 1** shows schematically an arrangement according to one embodiment of the present invention, arranged at an area of a weld.
**Figure 2** shows a muff and an electrically conducting tape arranged at the end of a pipe.
**Figure 3** shows schematically a detailed drawing of welding equipment according to the invention arranged at an area of a weld.
**Figure 4** shows a circuit diagram for an indicator unit according to the invention.
**Figure 5** shows schematic diagrams of the input signals and output signals to and from the indicator unit.

### Detailed description and embodiments

The method and arrangement according to the invention are admirably suitable for use for the welding of all types of pipelines of weldable polymer material.
It is of the highest importance to achieve installations, joins, of high quality and strength, both during new installation and during repair of the pipelines. Unreliable quality, or in the worst case systematic errors in the assembly, may in the long term be disastrous for the overall economy of a district heating network.

The method according to the invention is intended to monitor the cooling process in a welded joint during the welding of pipes of a weldable polymer material.

The method is particularly advantageous for use during the installation and repair of insulated pipelines such as district heating lines, district cooling lines and pipelines for oil that consist of an outer pipe of a weldable polymer material, such as polyethylene and polyethylene high density, PEHD, and an inner pipe that normally consists of steel embedded in insulation of polyurethane foam (PUR). A weld of a pipe consisting of polyethylene, for example polyethylene of high density PEHD, should be heated to approximately 250 °C in order to obtain a weld of high quality. The softening temperature of the material is approximately 110 °C. This means that the temperature should fall by 140 °C before the joint can be considered sufficiently cool for it to be possible to remove the welding equipment, and its associated clamping arrangement, without damage to the newly welded joint.

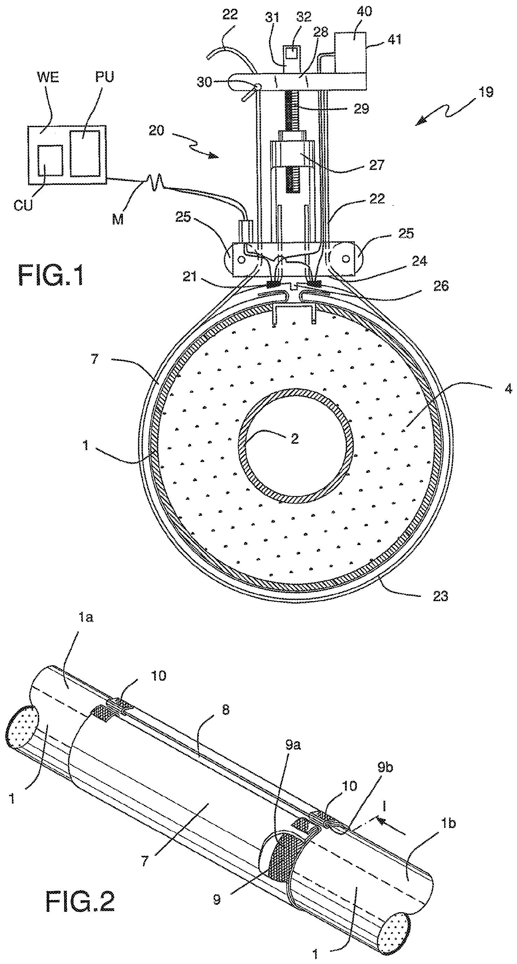

Figure 1 shows an example of a pipeline 1 of weldable polymer material that can be welded with the arrangement according to the invention.

The welding process comprises the placing of two ends of the pipes 1a and 1b next to each other and a muff 7 of a weldable polymer material being placed over the joint with an overlap over the ends of the pipes, where the overlap corresponds to the width of the desired welded joint on each side. The muff has a longitudinal slit 8 in order to facilitate the placing of the muff at the ends of the pipes and the welding process.

An electrically conducting tape 9 that is also permeable to molten plastic material is placed between an end of the pipe and the muff 7 such that the free ends 10 of the tape protrude through the slit 8.
The tape 9 may comprise a net 9a, with openings of stainless steel expander metal arranged regularly over its surface, such as a thin sheet of stainless steel that has been perforated, such that a well-defined net structure has been formed. The parameters of the material, such as its temperature coefficient of resistance, are thus known. It is advantageous to select a tape, a net, that has a temperature coefficient of resistance within a relatively narrow range, such that it is possible to calculate the changes in temperature with an acceptable precision. It is, however, perfectly possible to use an electrically conducting tape of another type.
The ends 10 of the tape, comprising the electrically conducting parts, the net 9a, are then each connected to an electrode 21 that can be connected by feed cables to a welding unit WE that has a power supply PU.

Figure 1 shows welding equipment 19 with a clamping means 20 that is placed around the muff and the pipe in the area of the weld, where the electrically conducting tape is connected to the welding equipment. The muff is held in place by the clamping means 20, which is in contact with the muff. The clamping means 20 comprises a flexible clamping band 22 that can be connected through break wheels 25 to a tightening means 24-30. The fraction of the circumference of the muff that is in contact with the pipe is in this way increased. The clamping band 22 is of a flexible material, such as kevlar, that withstands elevated temperatures. The break wheels 25 are arranged in a support 24. The support 24 interacts in this way with the clamping band 22 and exerts a clamping force around essentially the complete circumference of the muff.

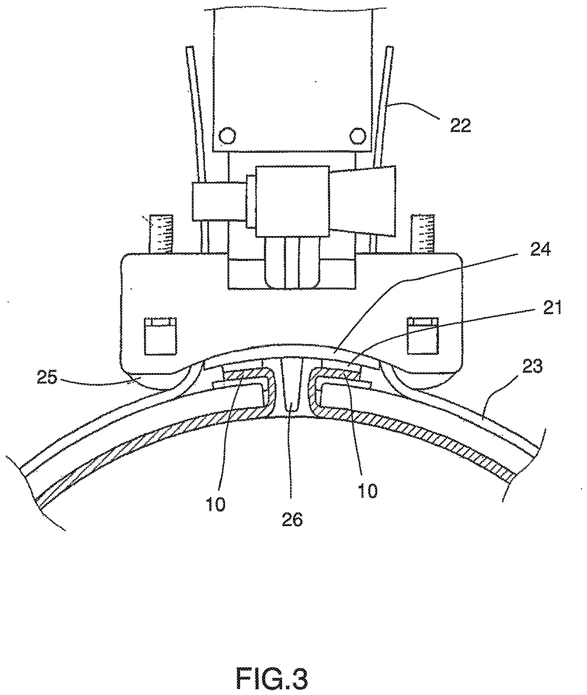

It is shown in Figure 3 that it is preferable that the support 24 be concave, following the curved surface of the muff for stable contact. It is further preferable that the support 24, at least at that part of the surface that is in contact with the muff, is made from an electrically insulating material that can withstand also the elevated temperatures that welding entails. It is furthermore an advantage if the support 24 of the equipment can be exchanged, for good adaptation to pipes of different diameters. Furthermore, it is an advantage if the support 24 is constructed from a flexible material that adapts the surface of contact to the relevant diameter of pipe.
The support 24 comprises an electrically insulating protrusion 26. It is intended that the protrusion 26 be inserted into the slit 8 and there enter as a dividing wall between the electrically conducting free ends 10 of the tape folded over the edges of the slit. The protrusion 26 may be designed as a lip or a ridge. The protrusion 26 can be displaced and it can be slid out to protrude, such that its depth of location into the slit can be varied depending on the wall thickness of the muff.

The tightening means 24 comprises two electrodes 21 for the connection of an electrical current to the electrically conducting tape 9, the ends 10 of which are, as has been previously mentioned, folded up one on each side of the slit 8.
The electrodes 21 are in connection with a power supply PU through feed cables M that supply a regulated current during a regulated period to the tape during the welding process. The electrodes 21 are connected also to an indicator unit 40 as is described in detail below.

In one particularly preferred embodiment, the tightening means 24-30 has an attachment means 30 demonstrates a stepless fastening by clamping, where the clamping band 22 is introduced into a slit in an attachment part that can be rotated around its axis. The clamping band 22 is wound up around the attachment part during rotation of the attachment part and the tension band 22 is placed under tension due to the friction that arises between each turn of the tension band 22.

The tightening means has a threaded part 27 arranged at the support and a part 28 that is displaceable relative to the support, together with a threaded tensioning screw 29 that unites the threaded parts, whereby these threaded components perform in interaction in a manner similar to that of a turnbuckle screw in such a way that rotation of the screw 29 in a first direction increases the distance between the parts 27 and 28 while the parts 27 and 28 approach each other on rotation of the screw in the opposite direction. The parts 27 and 28 are prevented from rotating relative to each other in a suitable manner, using, for example, guide rails, guide grooves, or similar solutions that are known to one skilled in the arts, where one of the components is allowed to be displaceable in the longitudinal direction but is not allowed to be rotated. The tensioning screw 29 is arranged in a penetrating hole in the part 28 in the upper end of the tension arrangement 24-30. The tensioning screw has an axle journal 31 at its upper end, where the axle journal is provided with a transverse penetrating opening for the reception of a means of driving rotation.

The muff 7 is welded to the pipe 1 through the supply of an electrical current from the power supply PU that is sufficient to heat the complete tape and the surrounding polymer material 9b to the melting temperature of the polymer material such that they melt together around their circumference, and melt through the tape in order to form a welded joint.
The current is switched off when the welding process is complete and when a welded joint that is broad and that has been melted completely through has formed around the tape 9.

The cooling process starts after the welding process has ended. A measurement process is carried out during the cooling process in order to identify the time at which the thermal plateau of the polymer material occurs.

The measurement process comprises the supply of a current pulse Ip to the electrically conducting tape from an indicator unit 40. The indicator unit 40 is designed such that it can independently check and monitor the cooling process of the welded joint when the welding process has been ended, and such that it can indicate to the operator that the cooling process is complete and that the welding equipment can be removed without the welded joint being damaged. It is preferable that the indicator unit is arranged at the welding equipment in order to facilitate the connections to the electrically conducting tape 9 and to the electrodes 21. A cover 41 protects the electronic circuits from the challenging environment in which the welding equipment is used.

It is important to note that the welding unit WE and its power supply PU and the welding control unit CU can in certain cases be left connected to the welding equipment 19 during a part of the subsequent cooling process. The indicator unit 40, which signals when the temperature of the weld falls below the softening temperature of the material, must, therefore, be so designed that the result is independent of whether the welding unit is connected or not.

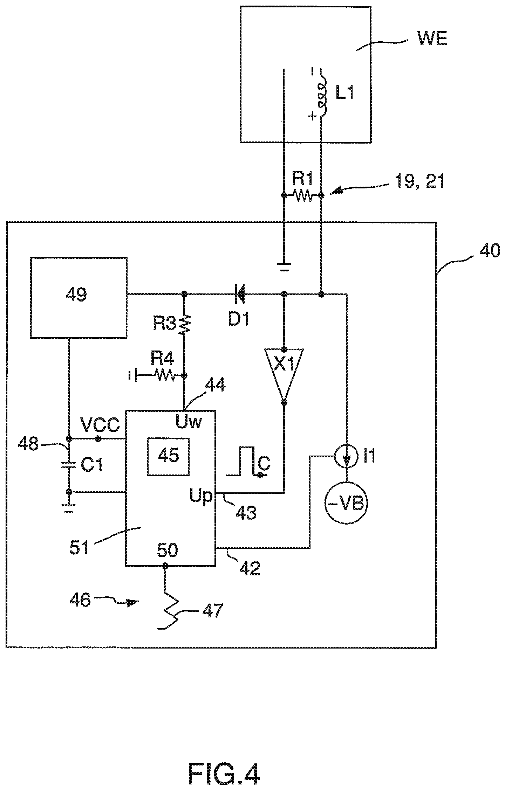

Figure 4 shows schematically a circuit diagram for an indicator unit according to the invention. The indicator unit 40 comprises a signal output 42 and a first and a second signal input 43, 44. The signal output and the signal inputs are connected to the electrodes 21 and to the electrically conducting tape 9, and at the beginning of the welding.

High voltages arise in the tape during the welding process, and thus the electronic circuits in the indicator unit must be protected. The signal output is, therefore, polarity-protected and current-limited. One polarity direction of the signal output comprises a diode D1, and the second polarity direction comprises a high-voltage transistor, which is current-limited or current-controlled.

The indicator unit 40 starts the measurement process by supplying a short current pulse Ip, of duration, for example, 10 µs, to the tape through the signal output 42 and from a current supply I1, preferably a constant-current generator. The current pulse Ip has a pre-determined amplitude, for example 35 mA.

There are several advantages to the use of a short current pulse. One of these is that the power consumption is low, but it is, in particular, advantageous when the welding unit WE is occasionally left behind after the completion of the welding. A welding unit WE that has an inductive output characteristic, marked by L1 in the circuit diagram in Figure 4, does not place a load on the measurement process in the indicator unit, and the welding unit can be removed at any time without this influencing the function of the indicator unit.

If conventional direct-current measurement is used, the welding unit causes problems for the measurement arrangement since the output impedance of the welding unit is connected in parallel with the electrically conducting tape. The resulting resistance will therefore be very low, and the measured values will no longer correlate satisfactorily with the temperature of the welded joint, if conventional direct-current measurement is carried out. If alternating current with a frequency of 10-100 kHz is instead used to measure the voltage signal and to determine the resistance of the tape, a better result will be obtained since the inductance in the welding cables and at the output of the welding unit mask the fact that the equipment is still connected to the welding equipment through the undesired parallel resistance being too high to affect the final result significantly. The result will be that the effective resistance is measured at the electrically conducting tape in the welded joint, and that the effective resistance is in this way understood to be the same, independently of whether the welding unit is connected or not. One disadvantage with the use of alternating current is that the electronic circuits that are used for the measurement are in this case placed under the high voltages that arise across the electrically conducting tape during the welding process. The method according to the invention specifies that a short current pulse is to be used during the measurement process; by adapting the indicator unit to this, an efficient protection of the electronic circuits against the high voltages that arise across the electrically conducting tape during the welding process is obtained.

The short current pulse Ip that is supplied to the tape 9 results in a fall of voltage across the tape. Since the resistance of the tape depends on the temperature in the welded joint, the voltage across the tape varies also with the temperature.

The indicator unit measures the voltage Up across the tape with a low-current signal amplifier X1 that is connected to the first signal input 43, an AD-converter input on the CPU circuit 51 of the indicator unit.

The CPU circuit 51 of the indicator unit determines, measures or calculates a resulting temperature-dependent parameter Sp in the tape.

The temperature-dependent parameter Sp comprises the voltage Up or the resistance Rp or the temperature Tp of the tape. The resistance Rp and the temperature Tp of the tape, which corresponds to the temperature of the polymer pipe material in the welded joint, are functions of the voltage Up in the tape, and they can be calculated or determined using knowledge of the temperature coefficient of resistance.

In an alternative embodiment, the CPU circuit monitors through the measurement process the relative change, the percentage change, in the value of the parameter Sp. The evaluation in the measurement process is based in this case on the relative change in the voltage Up or the resistance Rp or the temperature Tp.

Independently of whether the measurement process uses the voltage Up, the resistance Rp, the temperature Tp of the tape or the relative change in any one of these parameters to determine when the thermal plateau of the polymer material occurs, equivalent results are obtained.

The CPU circuit in the indicator unit has a memory unit 45 that stores the value of the measured or determined temperature-dependent parameter Sp.

A further current pulse Ip is supplied to the tape from the indicator unit after a predetermined time interval. The predetermined time interval in the measurement process is adapted according to the current supply in the indicator unit. The current pulse Ip has the same character as previously. The time interval is adapted according to the current supply and the size of the welded joint. The time interval is normally approximately 1 minute, but it can be considerably shorter or much longer.

The CPU circuit 51 of the indicator unit again measures the voltage Up across the tape, the temperature-dependent parameter Sp in the tape is determined, and the value of Sp is stored in the indicator unit. The CPU circuit of the indicator unit monitors and evaluates the value of the parameter Sp or the relative change in the value of the parameter Sp.

According to one embodiment, the evaluation in the CPU circuit of the indicator comprises the comparison of the most recently received value of the resulting temperature-dependent parameter Sp with at least one previously received value of Sp or with the mean value of several previously received values of Sp.

According to one embodiment, the method comprises that the resulting temperature-dependent parameter Sp is constituted by the voltage Up across the tape. The voltage Up across the tape is measured by the indicator unit when the current pulse Ip is supplied, and the value of Up is stored in the CPU circuit of the indicator unit. A new current pulse Ip is supplied to the tape from the indicator unit after a predetermined period of time and the voltage Up across the tape is again measured. The value of Up is stored in the indicator unit.
The CPU circuit carries out an evaluation in which the most recent value of Up is compared with at least one previously received value of Up or with a mean value of several previously received values of Up, the measurement process is repeated until the comparison shows that a plateau value for the voltage Up has been reached, which coincides with the polymer material having reached the thermal plateau.

One advantage of the voltage being evaluated in the measurement process is that it is not necessary to determine the weld temperature of the welded joint immediately after the welding process. The method is particularly advantageous since the absolute starting temperature of the welded joint and the material-specific coefficient of temperature become unimportant, just as do external circumstances such as weather and wind.

According to another embodiment, the evaluation comprises the determination of the derivative of the change in the parameter Sp, the measurement process is repeated until the change in the parameter Sp has reached a predetermined minimum interval. The minimum interval for the derivative is preferably close to zero. The temperature in the welded joint at this time falls only by approximately 1 degree per minute. The temperature in the polymer pipe material has in this case reached the thermal plateau. The measurement process can then be interrupted. In order to ensure that the thermal plateau has been reached, the measurement process can be repeated until the derivative of the change in voltage increases: the indicator unit subsequently indicates that the cooling process is ended. This means that the electronic circuits check when the rate of fall of temperature has been braked, and after this wait until the rate is to start to rise again.

A further method to ensure that the thermal plateau has been reached and that the welding equipment can be removed is to wait an extension period after the derivative of the change in voltage has reached the predetermined minimum interval, and only then to indicate that the cooling period has ended. This means that the electronic circuits check when the rate of fall of temperature has been braked, and after this add a fixed period, the magnitude of which depends on the size of the welded joint.

In one embodiment, the measured signal Up is used to determine the resistance Rp across the tape. In this case, the resulting temperature-dependent parameter Sp is constituted by the resistance Rp in the tape.
The resistance Rp across the tape is determined by the indicator unit when the current pulse Ip is supplied, and the value of Rp is stored in the indicator unit. A new current pulse Ip is supplied to the tape from the indicator unit after a predetermined period of time and the voltage Up across the tape is again measured. The value of the resistance Rp is determined. The value of Rp is stored and compared in the indicator unit with at least one previously received value of Rp or with a mean value of several previously received values of Rp. The measurement process is repeated until the comparison shows that a plateau value of the resistance Rp has been reached.

In a further embodiment, the evaluation in the indicator unit comprises the calculation of the relative change Rrel in the resistance.
In order to analyse the relative change Rrel from the start of the cooling process, the indicator unit assumes that the value of Rp that is determined first during the measurement process is a resistance reference value Rref that is stored in the indicator unit. The relative change Rrel in resistance is represented as a percentage change from the resistance reference value Rref. Each subsequent determination of Sp corresponds to the resistance Rp of the tape. The relative change Rrel in resistance is calculated on the basis of the resistance reference value Rref and the most recently received value Rp. The measurement process is repeated until the relative change Rrel in resistance has reached a predetermined level. A 15% lowering of resistance, for example, corresponds to a temperature fall of approximately 140 °C in a material commonly used in welded joints.
With knowledge of material-specific coefficients and empirical results, the indicator unit ends the cooling process when removal of the welding equipment is sure not to damage the welded joint.

In another embodiment the temperature fall ΔT of the welded joint is determined based on the relative change Rrel in resistance and on knowledge of the temperature coefficient of resistance. This is advantageous since the determination of the temperature Tw of the weld is then independent of the dimension of the pipe and the dimension of the tape. The measurement process is repeated until the temperature fall ΔT of the welded joint has reached a predetermined level.

The cooling process can be ended when the goal of the measurement process has been reached, i.e. when the thermal plateau in the polymer material and the area of the weld has been identified. In an embodiment, the indicator unit then activates a signal arrangement that signals that the welding equipment can be removed from the area of the weld.

Depending on different circumstances, such as thickness of the workpiece and the surrounding conditions, it may be necessary to wait a further period before the welding equipment is removed. In another embodiment, the cooling process is extended by an extension period once the measurement process has been ended. Only after the end of the extension period does the indicator unit activate a signal arrangement that signals that the welding equipment can be removed from the area of the weld.

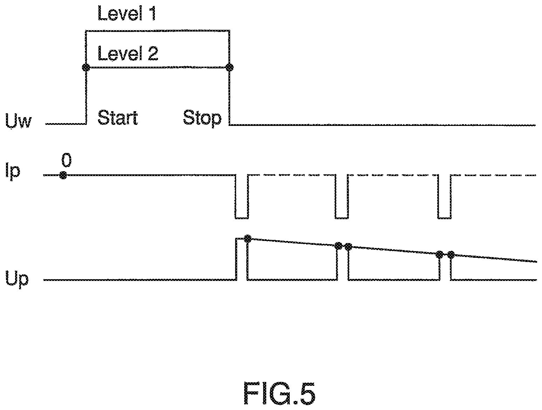

The length of the extension period varies and depends on the size of the welded joint. The second signal input 44 of the indicator unit is connected to the tape for measurement of the voltage Uw across the tape during the welding process, in order to detect the size of the welded joint. The current fed to the tape during the welding process is normally 25-30 A. The longer it takes to weld, the larger is the welded joint. The size of the welded joint is calculated after this and the extension period is adapted in accordance with it. The signal Uw indicates also when the welding process has ended. A schematic diagram of the signal Uw is shown in Figure 5. The right signal flank shows that the welded joint is ready and that the welding process is complete.

The indicator unit has a signal arrangement 46 that is activated in order to signal to the operator, the welding operator, that the cooling period has ended and that the welding equipment can be removed from the area of the weld without damaging the welded joint, when the indicator unit indicates that the cooling processed has ended. It is advantageous if the signal can be recognised at a distance from the welding equipment.

The signal arrangement comprises means for raising a signal, for example a sound signal, a light signal, an electromechanical signal or a radio signal. The signal arrangement for raising a signal with a light signal is, for example, a lamp on the welding equipment or a lamp on the power supply. The signal arrangement for raising a signal with an electromechanical signal is, for example, an electromagnet, a solenoid 47 comprised within the indicator unit, that, on activation, influences a signal means such as, for example, a flag on a holder that can be protruded from the electromagnet (not shown in the drawings), in order to signal that the cooling process has ended.
The signal arrangement may comprise also a radio transmitter comprised within the indicator unit and a radio receiver at the welding unit or built into a signal unit that is carried by the operator.

It should be noted that the cooling process can be interrupted before it has ended. This may occur if the welding unit WE has ceased to operate prematurely due to some operational alarm, which means that an operator-controlled restart of the welding process can take place long before the cooling process is complete.

Figure 4 shows that the indicator unit 40 has a power supply 48 that supplies power to the indicator unit during the complete cooling process. The indicator unit is therefore independent of whether the welding unit and the power supply PU are connected to the welding equipment or have been disconnected. The power supply comprises at least one of a battery and a back-up condensor 48. The advantage of using a back-up condensor is that it can be charged by the voltage fall across the electrical tape during the welding process. The back-up condensor 48 has a charging arrangement 49 that is connected to the electrically conducting tape during the welding period.

The back-up condensor 48 is designed such that it can supply the components of the indicator unit with power during the complete cooling process. The cooling process may last for up to 2 hours before it has ended and the welding equipment can be removed. The power supply is sufficient to ensure that the complete cooling process is monitored and ended, and the operator made aware by a signal arrangement that it is now safe to remove the welding equipment.

The CPU circuit 51 of the indicator unit carries out the measurement process of the cooling process. The CPU circuit in the indicator unit comprises means to carry out calculations and comparisons of stored, measured and calculated values of current, voltage, resistance, impedance, temperature, and relative changes in these. The CPU circuit may comprise also means for calculating and monitoring the derivative of a measured signal, where the measured signal is a function of the temperature of the welded joint.

The CPU circuit comprises a computer memory 45 that contains information with respect to material-specific parameters for the softening temperature and the melting temperature of the weldable polymer material, coefficients of resistance for the material in the electrically conducting tape, predetermined values for at least one of a satisfactory fall in temperature and a satisfactory change in relative resistance, and information concerning a material-specific conversion factor for the calculation of the temperature in the welded joint. The conversion factor is a direct function of the temperature coefficient of resistance. If the resistance R of the tape falls by, for example, 20% for a change in temperature of 200 °C, the conversion factor for obtaining the actual change in temperature in Celsius degrees will be 10.

By connecting the indicator unit to the electrically conducting tape 9, the indicator unit is provided with power when the welding unit PU is started. The voltage across the welded joint R1 is rectified through D1 and charges a back-up condensor through a charging circuit.

The CPU circuit 51 determines the size of the welded joint by reading the level Uw of voltage at the input 44, see Figure 5. The CPU circuit registers also the negative flank of the voltage curve (Figure 5, uppermost drawing) when the welding is finished. The indicator unit then emits a first negative current pulse Ip, which is, for example, 10 µs, at the signal output to the electrically conducting tape 9 in the welded joint. The CPU circuit controls a constant current generator I1 that has a negative feed voltage -VB. The constant current generator comprises a high voltage transistor.
The CPU circuit supplies a control signal to the constant current generator I1 that emits a corresponding negative current pulse Ip, a measurement pulse, to the welding equipment and thus also to the load R1, see Figure 5. Note that the diode D1 prevents the measurement pulse Ip from reaching the charging circuit 49 of the back-up condensor 48.

The negative current pulse Ip gives a very small drop in voltage across R1, and a signal amplifier X1 is introduced in order to give a suitable level at the input 43 to the CPU circuit.

The CPU circuit evaluates and follows how the amplified voltage signal Up at the signal input changes and falls as the temperature at the welded joint falls with time by repeating the supply of the current pulse Ip at an interval of at least 1 minute or more. This is particularly advantageous since the current is stored in the back-up condensor.

The output 50 at the CPU circuit activates a solenoid 47 in order to raise an indicator flag when the CPU circuit has identified that the thermal plateau has been reached and the extension period, if any, has passed. The cooling process has then ended and the welding equipment can be removed.

The embodiments and the technical distinctive features in the form of parts and fittings that have been described above can be freely combined within the innovative scope of the invention as long as the result corresponds to the design that is described in the patent claims.

## Claims

1. A method for monitoring the cooling process in a welded joint during the welding of pipes (1) of a weldable polymer material, where a welding process comprises that a muff (7) of a weldable polymer material is placed with overlap over the end of the pipe, that an electrically conducting tape (9) is placed between the pipe and the muff, that the muff is held in place using welding equipment (19) that makes contact with the muff, and that the muff is welded to the pipe through the supply of electrical current in order to heat the tape and the surrounding polymer in order to form a welded joint,
**characterised in that** a measurement process is carried out after the welding process has ended that comprises the supply of a current pulse Ip to the tape from an indicator unit (40),
that a resulting temperature-dependent parameter Sp of the tape is determined by the indicator unit, the value of Sp is stored in the indicator unit,
that a further current pulse Ip is supplied to the tape from the indicator unit after a predetermined time interval, that the parameter Sp in the tape is determined and that the value of Sp is stored in the indicator unit,
that the indicator unit monitors and evaluates the value of the parameter Sp or the relative change in the value of the parameter Sp,
that the measurement process is repeated until Sp reaches a plateau value or the relative change of Sp reaches a predetermined level,
that a signal arrangement signals that the welding equipment can be removed from the area of the weld when the indicator unit (40) indicates that the cooling process has ended.

2. The method according to claim 1, where the evaluation in the indicator unit (40) comprises that the most recently received value of the resulting temperature-dependent parameter Sp is compared with at least one previously received value of Sp or with a mean value of several previously received values of Sp.

3. The method according to claim 1 or 2, where the resulting temperature-dependent parameter Sp comprises a voltage Up across the tape.

4. The method according to claim 3, where the voltage Up across the tape is measured by the indicator unit (40) when the current pulse Ip is supplied, and the value of Up is stored in the indicator unit,
a new current pulse Ip is supplied to the tape from the indicator unit after a predetermined period of time, the voltage Up across the tape is measured and the value of Up is stored and compared in the indicator unit with at least one previously received value of Up or with a mean value of several previously received values of Up, the measurement process is repeated until the comparison shows that a plateau value of the voltage Up has been reached.

5. The method according to claim 1 or 2, where the resulting temperature-dependent parameter Sp comprises a resistance Rp across the tape.

6. The method according to claim 5, where the resistance Rp across the tape is determined by the indicator unit when the current pulse Ip is supplied, and the value of Rp is stored in the indicator unit,
a new current pulse Ip is supplied to the tape from the indicator unit after a predetermined period of time, the resistance Rp across the tape is measured and the value of Rp is stored and compared in the indicator unit with at least one previously received value of Rp or with a mean value of several previously received values of Rp, the measurement process is repeated until the comparison shows that a plateau value of the resistance Rp has been reached.

7. The method according to any one of the preceding claims, where the evaluation comprises that the derivative of the change in the parameter Sp is determined.

8. The method according to any one of the preceding claims, comprising that when the thermal plateau is identified an extension period is added.

9. The method according to any one of the preceding claims, where the welding voltage Uw across the tape is measured by the indicator unit during the welding process.

10. An arrangement for monitoring the cooling of a welded joint during the welding of pipes (1) of a weldable polymer material, where the welding comprises that a muff (7) of a weldable polymer material is placed with overlap over the end of the pipe, that an electrically conducting tape (9) is placed between the pipe and the muff, that a welding equipment (19) is placed around the muff and the pipe in the area of the weld, where the electrically conducting tape is connected to the welding equipment, and the welding equipment is connected to a power supply PU, whereby a welded joint is formed when electrical current is supplied from the power supply that heats the tape and the surrounding polymer material **characterised in** an indicator unit (40) that comprises a signal output (42) suitable for being connected to the electrically conducting tape (9) in order to supply a current pulse Ip to the tape, at least one signal input (43) suitable for being connected to the electrically conducting tape in order to receive a signal concerning a resulting temperature-dependent parameter Sp, a CPU circuit (51) for the evaluation of the resulting temperature-dependent parameter Sp, and a signal arrangement (46).

11. The arrangement according to claim 10, where the indicator unit (40) is sutiable for being arranged on the welding equipment (19).

12. The arrangement according to any one of claims 10-11, where one polarity direction of the signal output comprises a diode (D1), and the second polarity direction comprises a high-voltage transistor.

13. The arrangement according to any one of claims 10-12, where the indicator unit (40) has a current-supply unit, for example a back-up condensor (48) or a battery, that supplies current to the indicator unit during the cooling process.

14. The arrangement according to claim 13, where the back-up condensor (48) has a charging arrangement (49) that is charged by the voltage fall across the electrical tape (9) during the welding process.

15. The arrangement according to any one of claims 10-14, where the indicator unit comprises a signal arrangement (46) in order to emit at least one type of signal, for example a sound signal, a light signal, a visual signal, or a radio signal.

16. The arrangement according to claim 15, where the signal arrangement comprises an electromagnet (47) that influences on activation a signal means to signal that the cooling process has ended.

17. The arrangement according to any one of claims 10-16, where the welding equipment (19) has a tightening means (24-30) with break wheels (25) and a clamping means (20) comprising a flexible clamping band (22) that is placed around the muff and the pipe in the area of the weld and that can be connected through the break wheels to the tightening means.

18. The arrangement according to any one of claims 10-17, where the welding equipment (19) has a support (24) with a surface part in that makes contact with the muff (7), where the surface part that makes contact with the muff is concave in order to achieve good surface contact with the curved outer surface of the muff, and is manufactured from an electrically insulating material.

19. The arrangement according to claim 18, where the support (24) comprises an electrically insulating displaceable protrusion (26) intended to be inserted into the slit (8).

20. The arrangement according to any one of claims 17-19, where the tightening means (24-30) demonstrates a threaded part (27) fixed arranged at the support (24) and a part (28) that is displaceable relative to this, and a threaded tensioning screw (29) that unites the parts (27, 28), that the free ends (22.1, 22.2) of the flexible clamping band are arranged at the part (28) and that at least one of the attachment means (30) demonstrates a stepless attachment of the clamping band (22).

21. The arrangement according to claim 20, where the tensioning screw (29) has an axle journal (31) at its upper end, where the axle journal is arranged to receive a means that drives rotation.

## Patentansprüche

1. Verfahren zur Überwachung des Abkühlungsprozesses in einer Schweißverbindung während des Schweißens von Rohren (1) eines schweißbaren Polymermaterials, wobei ein Schweißvorgang umfasst, dass eine Muffe (7) eines schweißbaren Polymermaterials mit Überlappung über dem Ende des Rohrs angeordnet wird, dass ein elektrisch leitendes Band (9) zwischen dem Rohr und der Muffe angeordnet wird, dass die Muffe unter Anwendung von Schweißausrüstung (19), die mit der Muffe in Kontakt ist, in Position gehalten wird, und dass die Muffe durch Zufuhr von elektrischem Strom, um das Band und das umgebende Polymer zur Bildung einer Schweißverbindung aufzuwärmen, mit dem Rohr verschweißt wird,
**dadurch gekennzeichnet, dass** ein Messvorgang durchgeführt wird, nachdem der Schweißvorgang beendet ist, der die Zufuhr eines Stromimpulses Ip zum Band von einer Anzeigeeinheit (40) umfasst,
dass ein sich ergebender temperaturabhängiger Parameter Sp des Bands durch die Anzeigeeinheit bestimmt wird, der Wert von Sp wird in der Anzeigeeinheit gespeichert,
dass ein weiterer Stromimpuls Ip nach einer vorgegebenen Zeitspanne zum Band von der Anzeigeeinheit zugeführt wird, dass der Parameter Sp im Band bestimmt wird, und dass der Wert von Sp in der Anzeigeeinheit gespeichert wird,
dass die Anzeigeeinheit den Wert des Parameters Sp oder die relative Änderung des Werts des Parameters Sp überwacht und auswertet,
dass der Messvorgang wiederholt wird, bis Sp einen Plateauwert erreicht oder die relative Änderung von Sp ein vorgegebenes Niveau erreicht,
dass eine Signalanordnung signalisiert, dass die Schweißausrüstung von der Schweißstelle entfernt werden kann, wenn die Anzeigeeinheit (40) anzeigt, dass der Abkühlungsprozess beendet ist.

2. Verfahren nach Anspruch 1, wobei die Auswertung in der Anzeigeeinheit (40) umfasst, dass der zuletzt empfangene Wert des sich ergebenden temperaturabhängigen Parameters Sp mit mindestens einem zuvor empfangenen Wert von Sp oder mit einem Mittelwert von mehreren zuvor empfangenen Werten von Sp verglichen wird.

3. Verfahren nach Anspruch 1 oder 2, wobei der sich ergebende temperaturabhängige Parameter Sp eine Spannung Up quer über das Band umfasst.

4. Verfahren nach Anspruch 3, wobei die Spannung Up quer über das Band durch die Anzeigeeinheit (40) gemessen wird, wenn der Stromimpuls Ip zugeführt wird, und der Wert von Up in der Anzeigeeinheit gespeichert wird, ein neuer Stromimpuls Ip nach einem vorgegebenen Zeitraum zum Band von der Anzeigeeinheit zugeführt wird, die Spannung Up quer über das Band gemessen wird, und der Wert von Up gespeichert wird und in der Anzeigeeinheit mit mindestens einem zuvor empfangenen Wert von Up oder mit einem Mittelwert von mehreren zuvor empfangenen Werten von Up verglichen wird, der Messvorgang wiederholt wird, bis der Vergleich zeigt, dass ein Plateauwert der Spannung Up erreicht ist.

5. Verfahren nach Anspruch 1 oder 2, wobei der sich ergebende temperaturabhängige Parameter Sp einen Widerstand Rp quer über das Band umfasst.

6. Verfahren nach Anspruch 5, wobei der Widerstand Up quer über das Band durch die Anzeigeeinheit bestimmt wird, wenn der Stromimpuls Ip zugeführt wird, und der Wert von Rp in der Anzeigeeinheit gespeichert wird,
ein neuer Stromimpuls Ip nach einem vorgegebenen Zeitraum zum Band von der Anzeigeeinheit zugeführt wird, der Widerstand Rp quer über das Band gemessen wird, und der Wert von Rp gespeichert wird und in der Anzeigeeinheit mit mindestens einem zuvor empfangenen Wert von Rp oder mit einem Mittelwert von mehreren zuvor empfangenen Werten von Rp verglichen wird, der Messvorgang wiederholt wird, bis der Vergleich zeigt, dass ein Plateauwert des Widerstands Rp erreicht ist.

7. Verfahren nach einem der vorgehenden Ansprüche, wobei die Auswertung umfasst, dass der abgeleitete Wert der Änderung im Parameter Sp bestimmt wird.

8. Verfahren nach einem der vorgehenden Ansprüche, umfassend dass ein Verlängerungszeitraum zugelegt wird, wenn das thermische Plateau identifiziert wird.

9. Verfahren nach einem der vorgehenden Ansprüche, wobei die Schweißspannung Uw quer über das Band durch die Anzeigeeinheit während des Schweißvorgangs gemessen wird.

10. Anordnung zur Überwachung der Abkühlung einer Schweißverbindung während des Schweißens von Rohren (1) eines schweißbaren Polymermaterials, wobei das Schweißen umfasst, dass eine Muffe (7) eines schweißbaren Polymermaterials mit Überlappung über dem Ende des Rohrs angeordnet wird, dass ein elektrisch leitendes Band (9) zwischen dem Rohr und der Muffe angeordnet wird, dass eine Schweißausrüstung (19) um die Muffe und das Rohr im Bereich der Schweißstelle angeordnet wird, wo das elektrisch leitende Band mit der Schweißausrüstung verbunden wird, und die Schweißausrüstung mit einer Stromversorgung PU verbunden wird, wobei eine Schweißverbindung gebildet wird, wenn elektrischer Strom von der Stromversorgung zugeführt wird, die das Band und das umgebende Polymermaterial erwärmt, **gekennzeichnet durch** eine Anzeigeeinheit (40), die einen Signalausgang (42), der dafür geeignet ist, mit dem elektrisch leitenden Band (9) verbunden zu werden, um einen Stromimpuls Ip zum Band zuzuführen, mindestens einen Signaleingang (43), der dafür geeignet ist, mit dem elektrisch leitenden Band verbunden zu werden, um ein Signal hinsichtlich eines sich ergebenden temperaturabhängigen Parameters Sp zu empfangen, einen CPU-Kreislauf (51) zur Auswertung des sich ergebenden temperaturabhängigen Parameters Sp und eine Signalanordnung (46) umfasst.

11. Anordnung nach Anspruch 10, wo die Anzeigeeinheit (40) dafür geeignet ist, auf der Schweißausrüstung (19) angeordnet zu werden.

12. Anordnung nach einem der Ansprüche 10 bis 11, wo eine Polaritätsrichtung des Signalausgangs eine Diode (D1) umfasst, und die andere Polaritätsrichtung einen Hochspannungstransistor umfasst.

13. Anordnung nach einem der Ansprüche 10 bis 12, wo die Anzeigeeinheit (40) eine Stromversorgungseinheit, z.B. einen Hilfskondensator (48) oder eine Batterie, aufweist, die während des Abkühlungsprozesses Strom zur Anzeigeeinheit zuführt.

14. Anordnung nach Anspruch 13, wo der Hilfskondensator (48) eine Ladeanordnung (49) aufweist, die durch den Spannungsabfall quer über das elektrische Band (9) während des Schweißvorgangs aufgeladen wird.

15. Anordnung nach einem der Ansprüche 10 bis 14, wo die Anzeigeeinheit eine Signalanordnung (46) zum Aussenden von mindestens einer Art Signal, z.B. einem Schallsignal, einem Lichtsignal, einem sichtbaren Signal oder einem Funksignal, umfasst.

16. Anordnung nach Anspruch 15, wo die Signalanordnung einen Elektromagneten (47) umfasst, der die Aktivierung eines Signalmittels zum Signalisieren, dass der Abkühlungsprozess beendet ist, beeinflusst.

17. Anordnung nach einem der Ansprüche 10 bis 16, wo die Schweißausrüstung (19) ein Festziehmittel (24-30) mit Bruchrädern (25) und ein Klemmmittel (20) umfassend ein flexibles Klemmband (22), das um die Muffe und das Rohr im Bereich der Schweißstelle herum angeordnet ist und durch die Bruchräder mit den Festziehmitteln verbunden werden kann, aufweist.

18. Anordnung nach einem der Ansprüche 10 bis 17, wo die Schweißausrüstung (19) eine Unterstützung (24) mit einem Oberflächenteil, der mit der Muffe (7) in Kontakt ist, aufweist, wo der Oberflächenteil, der mit der Muffe in Kontakt ist, konkav ist, um guten Oberflächenkontakt mit der gekrümmten Außenfläche der Muffe zu erreichen, und aus einem elektrisch isolierenden Material hergestellt ist.

19. Anordnung nach Anspruch 18, wo die Unterstützung (24) einen elektrisch isolierenden verlagerbaren Vorsprung (26) umfasst, der zur Einführung in den Spalt (8) vorgesehen ist.

20. Anordnung nach einem der Ansprüche 17 bis 19, wo das Festziehmittel (24-30) einen Gewindeteil (27), der an der Unterstützung (24) fest angeordnet ist, und einen Teil (28), der im Verhältnis zu diesem verlagerbar ist, und eine Spannschraube (29) mit Gewinde, die die Teile (27, 28) verbindet, darlegt, dass die freien Enden (22.1, 22.2) des flexiblen Klemmbands am Teil (28) angeordnet sind und dass mindestens eines der Befestigungsmittel (30) eine stufenlose Befestigung des Klemmbands (22) darlegt.

21. Anordnung nach Anspruch 20, wo die Spannschraube (29) einen Achsschenkel (31) an seinem oberen Ende aufweist, wo der Achsschenkel dafür eingerichtet ist, ein Mittel, das die Drehung antreibt, aufzunehmen.

## Revendications

1. Procédé de surveillance du processus de refroidissement dans un joint soudé pendant le soudage de tubes (1) en un matériau polymère soudable, où un procédé de soudage comprend qu'un manchon (7) d'un matériau polymère soudable est placé avec chevauchement sur la fin du tuyau, qu'une bande électriquement conductrice (9) est placée entre le tuyau et le manchon, que le manchon est maintenu en place en utilisant un équipement de soudage (19) qui est en contact avec le manchon, et que le manchon est soudé au tuyau à travers l'alimentation d'un courant électrique pour chauffer la bande et le polymère environnant afin de former un joint soudé,
**caractérisé en ce qu**'un processus de mesure est effectué après la fin du processus de soudage qui comprend l'alimentation d'une impulsion de courant Ip à la bande à partir d'une unité indicatrice (40),
qu'un paramètre dépendant de la température résultant Sp de la bande est déterminé par l'unité indicatrice, la valeur de Sp est stockée dans l'unité d'indicateur,
qu'une autre impulsion de courant Ip est alimentée à la bande à partir de l'unité indicatrice après un intervalle de temps prédéterminé, que le paramètre Sp dans la bande est déterminé, et que la valeur de Sp est stockée dans l'unité d'indicateur,
que l'unité d'indicatrice surveille et évalue la valeur du paramètre Sp ou la variation relative de la valeur du paramètre Sp,
que le processus de mesure est répété jusqu'à ce que Sp atteigne une valeur de plateau ou que le changement relatif de Sp atteigne un niveau prédéterminé,
qu'un dispositif de signal signale que l'équipement de soudage peut être retiré de la zone de soudure lorsque l'unité indicatrice (40) indique que le processus de refroidissement est terminé.

2. Procédé selon la revendication 1, dans lequel l'évaluation dans l'unité indicatrice (40) comprend que la dernière valeur reçue du paramètre dépendant de la température résultant Sp est comparée à au moins une valeur précédemment reçue de Sp ou avec une valeur moyenne de plusieurs valeurs précédemment reçues de Sp.

3. Procédé selon la revendication 1 ou 2, dans lequel le paramètre dépendant de la température résultant Sp comprend une tension Up à travers la bande.

4. Procédé selon la revendication 3, dans lequel la tension Up à travers la bande est mesurée par l'unité indicatrice (40) lorsque l'impulsion de courant Ip est alimentée, et la valeur Up est stockée dans l'unité indicatrice,
une nouvelle impulsion de courant Ip est alimentée à la bande à partir de l'unité indicatrice après une période de temps prédéterminée, la tension Up à travers la bande est mesurée et la valeur de Up est stockée et comparée dans l'unité indicatrice avec au moins une valeur précédemment reçue de Up ou avec une valeur moyenne de plusieurs valeurs précédemment reçues de Up, le processus de mesure est répété jusqu'à ce que la comparaison montre qu'une valeur de plateau de la tension Up a été atteinte.

5. Procédé selon la revendication 1 ou 2, dans lequel le paramètre dépendant de la température résultant Sp comprend une résistance Rp à travers la bande.

6. Procédé selon la revendication 5, dans lequel la résistance Rp à travers la bande est déterminée par l'unité indicatrice lorsque l'impulsion de courant Ip est alimentée, et la valeur de Rp est stockée dans l'unité indicatrice,
une nouvelle impulsion de courant Ip est alimentée à la bande à partir de l'unité indicatrice après une période de temps prédéterminée, la résistance Rp à travers la bande est mesurée et la valeur de Rp est stockée et comparée dans l'unité indicatrice avec au moins une valeur précédemment reçue de Rp ou avec une valeur moyenne de plusieurs valeurs précédemment reçues de Rp, le processus de mesure est répété jusqu'à ce que la comparaison montre qu'une valeur de plateau de la résistance Rp a été atteinte.

7. Procédé selon l'une quelconque des revendications précédentes, dans lequel l'évaluation comprend la détermination de la dérivée de la variation du paramètre Sp.

8. Procédé selon l'une quelconque des revendications précédentes, comprenant le fait que lorsque le plateau thermique est identifié, une période d'extension est ajoutée.

9. Procédé selon l'une quelconque des revendications précédentes, dans lequel la tension de soudage Uw à travers la bande est mesurée par l'unité indicatrice pendant le processus de soudage.

10. Dispositif de surveillance du refroidissement d'un joint soudé pendant le soudage de tubes (1) en un matériau polymère soudable, où un procédé de soudage comprend qu'un manchon (7) d'un matériau polymère soudable est placé avec chevauchement sur la fin du tuyau, qu'une bande électriquement conductrice (9) est placée entre le tuyau et le manchon, qu'un équipement de soudage (19) est placé autour du manchon et du tuyau dans la zone de la soudure, où la bande électriquement conductrice est connectée à l'équipement de soudage, et l'équipement de soudage est connecté à une source d'alimentation PU, un joint soudé étant formé lorsqu'un courant électrique est fourni par l'alimentation électrique qui chauffe la bande et le matériau polymère environnant, **caractérisé par** une unité indicatrice (40) qui comprend une sortie de signal (42) appropriée pour être connectée à la bande électriquement conductrice (9) pour alimenter une impulsion de courant Ip à la bande, au moins une entrée de signal (43) appropriée pour être connectée à la bande électriquement conductrice pour recevoir un signal concernant un paramètre dépendant de la température Sp résultant, un circuit d'unité centrale (51) pour l'évaluation du paramètre dépendant de la température résultant Sp, et un dispositif de signal (46).

11. Dispositif selon la revendication 10, dans lequel l'unité indicatrice (40) est appropriée pour être disposée sur l'équipement de soudage (19).

12. Dispositif selon l'une quelconque des revendications 10 à 11, dans lequel l'une direction de polarité de la sortie de signal comprend une diode (D1), et la deuxième direction de polarité comprend un transistor à haute tension.

13. Dispositif selon l'une quelconque des revendications 10 à 12, dans lequel l'unité indicatrice (40) comporte une unité d'alimentation en courant, par exemple un condensateur de secours (48) ou une batterie qui fournit du courant à l'unité indicatrice pendant le processus de refroidissement.

14. Dispositif selon la revendication 13, dans lequel le condenseur de secours (48) comporte un dispositif de charge (49) qui est chargé par la chute de tension à travers la bande électrique (9) pendant le processus de soudage.

15. Dispositif selon l'une quelconque des revendications 10 à 14, dans lequel l'unité indicatrice comprend un dispositif de signal (46) pour émettre au moins un type de signal, par exemple un signal sonore, un signal lumineux, un signal visuel ou un signal radio.

16. Dispositif selon la revendication 15, dans lequel le dispositif de signal comprend un électroaimant (47) qui influence à l'activation d'un moyen de signal pour signaler que le processus de refroidissement est terminé.

17. Dispositif selon l'une quelconque des revendications 10 à 16, dans lequel l'équipement de soudage (19) comporte un moyen de tension (24-30) avec des roues de rupture (25) et un moyen de serrage (20) comprenant une bande de serrage flexible (22) qui est placée autour du manchon et du tuyau dans la zone de la soudure et qui peut être reliée par les roues de rupture au moyens de tension.

18. Dispositif selon l'une quelconque des revendications 10 à 17, dans lequel l'équipement de soudage (19) comporte un support (24) avec une partie de surface en contact avec le manchon (7), où la partie de surface qui entre en contact avec le manchon, est concave afin d'obtenir un bon contact de surface avec la surface extérieure incurvée du manchon, et est fabriquée à partir d'un matériau électriquement isolant.

19. Dispositif selon la revendication 18, dans lequel le support (24) comprend une protubérance déplaçable électriquement isolante (26) destinée à être insérée dans la fente (8).

20. Dispositif selon l'une quelconque des revendications 17 à 19, dans lequel le moyen de tension (24-30) présente une partie filetée (27) fixée au niveau du support (24) et une partie (28) déplaçable par rapport à celle-ci, et une vis de tension filetée (29) qui unit les parties (27, 28), que les extrémités libres (22.1, 22.2) de la bande de serrage flexible sont disposées au niveau de la partie (28) et que l'un au moins des moyens de fixation (30) présente une fixation continue de la bande de serrage (22).

21. Dispositif selon la revendication 20, dans lequel la vis de tension (29) a un tourillon d'essieu (31) à son extrémité supérieure, où le tourillon d'essieu est agencé pour recevoir un moyen qui entraîne la rotation.
